# EUROPEAN PATENT APPLICATION

(11) **EP 3 076 063 A1**
(43) Date of publication of application: **05.10.2016**
(21) Application number: 16163246.8
(22) Date of filing: 31.03.2016
(51) Int. Cl.: F16L 55/11, F16L 3/00, F16L 57/00, B66C 13/12, B66C 13/14, B66C 23/62

(54) **RETENTION ASSEMBLY FOR A CONDUIT ON A CRANE**

(30) Priority: 31.03.2015 US 201562141150 P
(71) Applicant: Manitowoc Crane Companies, LLC, Manitowoc WI 54221-0066 (US)
(72) Inventor: FERNANDEZ, Philip C., De Pere, WI Wisconsin 54115 (US); O'NEIL, William J., Green Bay, WI Wisconsin 54311 (US); RUCINSKI, Joseph R., Manitowoc, WI Wisconsin 54220 (US)
(74) Representative: Schwabe - Sandmair - Marx

(57) **Abstract**

A retention assembly to support and couple a conduit (15) to a mounting bracket on a crane includes at least one mounting bracket and at least one conduit (15) with at least one end (17) with a connection fitting (16). A plug (40) is removably coupled to the connection fitting (16). The plug (40) includes a first end and a second end spaced apart from the first end. The plug (40) also includes a stud (70) having a first end and a second end spaced apart from the first end, and a longitudinal axis extending between the first end of the stud and the second end of the stud. The second end of the stud is configured to extend away from the first end of the plug. A retainer is configured to couple with the stud to retain the conduit proximate the at least one mounting bracket.

## Description

### REFERENCE TO EARLIER FILED APPLICATIONS

The present application claims priority to and the benefit of U.S. Provisional Patent Application Serial No. 62/141,150 filed March 31, 2015 and titled Retention Assembly for a Conduit on a Crane, the disclosure of which is incorporated in its entirety by this reference.

### BACKGROUND

The present invention relates to construction vehicles, particularly lift cranes, that include various conduits, such as electrical cables and hoses of various types, and various methods of retaining those conduits during the transportation of the construction vehicle.

Large construction vehicles often must be disassembled and later reassembled when the vehicle is transported between job sites. The vehicle typically is designed to be disassembled into various smaller component modules that meet various load and height restrictions for transport on semi-trailers and then reassembled into a functioning vehicle at the new location. The vehicles are sufficiently large that systems, such as mechanical, hydraulic, and electrical, must be divisible with each module because these systems run throughout the vehicle. For example, hydraulic conduits might use specialized connection fittings, such as a quick connect to separate the hydraulic component at the interface of two modules.

Once disconnected, the conduit has two free ends where it was once coupled together with the connection fitting. These free ends and the connection fitting should be protected from the elements to prevent any contamination from entering into the conduit. In addition, the conduit should be restrained in some matter to protect the connection fitting and to prevent damage to the free end of the conduit that otherwise might occur were the free end not restrained.

Previous solutions to this problem have not been satisfactory. For example, conduits have been rested upon a bar or gang, and secured with a cross-beam, cable, or other similar structure. A problem, however, is that these structures still typically allow a greater degree of movement at the free end of the conduit than is desirable, which risks damage not only the conduit itself, but also any structures near the free end of the conduit.

Another example includes a plug in a fixed location on the structure of the vehicle. A user must then couple the free end of the conduit to the fixed plug. A challenge, however, lies in that many of these conduits, particular large capacity hydraulic conduits, are unwieldy and quite difficult to either rotate or manipulate the conduit sufficiently to effect a satisfactory connection with the fixed plug.

Consequently, there is a need for a retention assembly that reduces the risk of damage to the conduit and surrounding structures when a conduit is separated at a connection fitting. In addition, the retention assembly should be easier for a single person to manipulate compared to the previously available solutions.

### BRIEF SUMMARY

A retention assembly to support and couple a conduit to a mounting bracket on a crane includes at least one mounting bracket and at least one conduit with at least one end with a connection fitting. A plug is removably coupled to the connection fitting. The plug includes a first end and a second end spaced apart from the first end. The plug also includes a stud having a first end and a second end spaced apart from the first end, and a longitudinal axis extending between the first end of the stud and the second end of the stud. The second end of the stud is configured to extend away from the first end of the plug. A retainer is configured to couple with the stud to retain the conduit proximate the at least one mounting bracket.

Various embodiments of the stud include neck portions of reduced dimension, partial recesses, and holes to receive the various embodiments of the retainers. Optionally, the stud includes a stud extension to be received by a recess in the plug. Alternatively, the stud includes a recess to receive a plug extension.

Various embodiments of the mounting bracket include through holes, key slots, slots and the like.

Various embodiments of the retainers include spring pins, lynch pins, wire pins, retainers pivotably coupled to the mounting bracket, hooks, posts, and portions of the mounting bracket itself.

Methods of manufacturing a plug of the retention assembly are also disclosed.

As used herein, "at least one," "one or more," and "and/or" are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" means A alone, B alone, C alone, A and B together, A and C together, B and C together, or A, B and C together.

Various embodiments of the present inventions are set forth in the attached figures and in the Detailed Description as provided herein and as embodied by the claims. It should be understood, however, that this Summary does not contain all of the aspects and embodiments of the one or more present inventions, is not meant to be limiting or restrictive in any manner, and that the invention(s) as disclosed herein is/are and will be understood by those of ordinary skill in the art to encompass obvious improvements and modifications thereto.

Additional advantages of the present invention will become readily apparent from the following discussion, particularly when taken together with the accompanying drawings.

### BRIEF DESCRIPTION OF THE DRAWINGS

Fig. 1 is an embodiment of crane that includes a conduit and a retention assembly.
Fig. 2 is a conduit with a connection fitting and an embodiment of a plug of the retention assembly.
Fig. 3 is a perspective view of an embodiment of a stud, a mounting bracket, and a retainer of the retention assembly.
Fig. 4 is another view of the embodiment in FIG. 3.
Fig. 5 is another view of the embodiment in FIG. 3.
Fig. 6 is another view of the embodiment in FIG. 3.
Fig. 7 is another embodiment of a mounting bracket of the retention assembly.
Fig. 8 is another embodiment of a mounting bracket of the retention assembly.
Fig. 9 is another embodiment of a mounting bracket and a retainer of the retention assembly.
Fig. 10 is another view of the embodiment in FIG. 9.
Fig. 11 is another view of the embodiment in FIG. 9.
Fig. 12 is a perspective view of an embodiment of a plug of the retention assembly.
Fig. 13 is another view of the embodiment in FIG. 12.
Fig. 14 is another view of the embodiment in FIG. 13.
Fig. 15 is another embodiment of a plug and a stud of the retention assembly.
Fig. 16 is a plan view of a bolt for use with an embodiment of a plug of the retention assembly.
Fig. 17 is another embodiment of a plug and a stud of the retention assembly.
Fig. 18 is a perspective view of an embodiment of a stud of the retention assembly.
Fig. 19 is a plan view of another embodiment of a stud of the retention assembly.
Fig. 20 is a cross-section view of the embodiment in FIG. 19.
Fig. 21 is a plan view of another embodiment of a stud of the retention assembly.
Fig. 22 is a plan view of another embodiment of a stud of the retention assembly.
Fig. 23 is cross-section view of the embodiment in FIG. 22.
Fig. 24 is a plan view of another embodiment of a stud of the retention assembly.
Fig. 25 is a plan view of another embodiment of a stud of the retention assembly.
Fig. 26 is a cross-section view of the embodiment in FIG. 25.
Fig. 27 is a plan view of another embodiment of a stud of the retention assembly.
Fig. 28 is a cross-section view of the embodiment in FIG. 27.
Fig. 29 is a plan view of another embodiment of a stud of the retention assembly.
Fig. 30 is a plan view of another embodiment of a stud of the retention assembly.
Fig. 31a is a plan view of another embodiment of a stud of the retention assembly.
Fig. 31b is another plan view of the embodiment of FIG. 31 a.
Fig. 32 is an embodiment of a retainer of the retention assembly.
Fig. 33 is another embodiment of a retainer of the retention assembly.
Fig. 34 is another embodiment of a retainer of the retention assembly.
Fig. 35 is another embodiment of a retainer of the retention assembly.
Fig. 36a is another embodiment of a retainer of the retention assembly.
Fig. 36b is another embodiment of a retainer of the retention assembly.
Fig. 36c is another embodiment of a retainer of the retention assembly.
Fig. 37a is another embodiment of a retainer of the retention assembly.
Fig. 37b is another embodiment of a retainer of the retention assembly.
Fig. 38 is another embodiment of a retainer of the retention assembly.
Fig. 39 is another embodiment of a retainer of the retention assembly.
Fig. 40 is another embodiment of a retainer of the retention assembly.
Fig. 41 is another embodiment of a retainer of the retention assembly.

### DETAILED DESCRIPTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

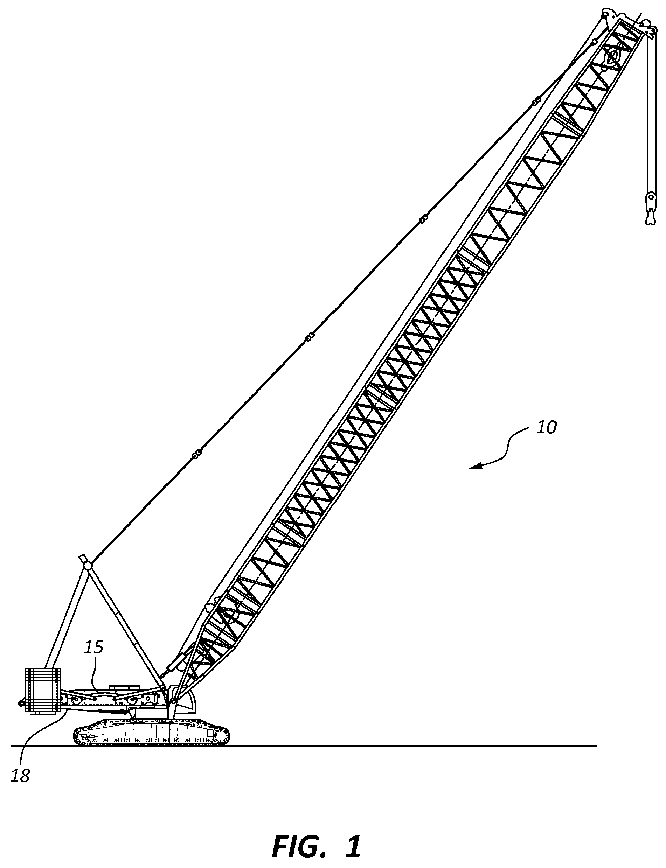

Figure 1 illustrates a representative example of construction vehicle 10, in this instance a crane, that includes a conduit 15. It is understood that any type of construction vehicle, including trucks, agricultural vehicles, backhoes, bulldozers, and the like can implement the various embodiments of the invention. For convenience, however, the various embodiments of the invention will be discussed in the context of a crane 10.

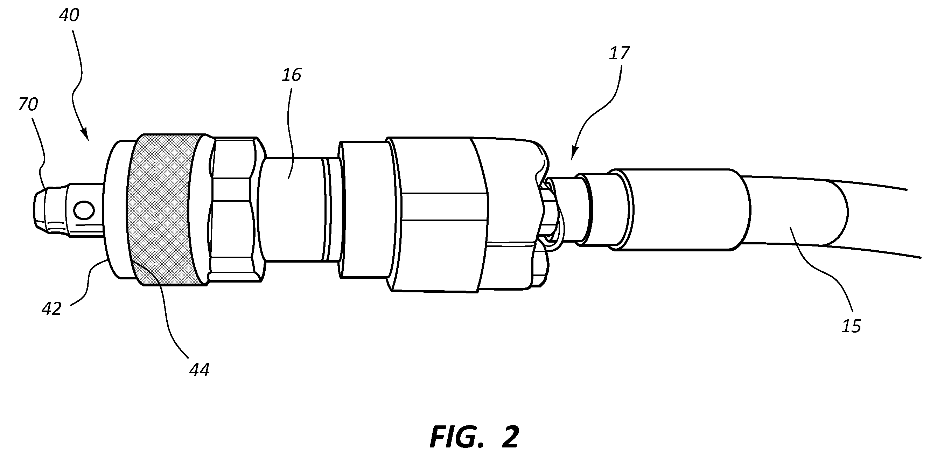

Figures 1 and 2 illustrate one conduit 15 but the number of conduits can range from one to dozens or more. The conduits 15 may include one or more of electric cables, bundled electric cables, hoses, fluid lines, hydraulic lines, and the like that may need to be stowed during transportation and use of the crane 10 so as to minimize the risk that the conduits 15 are pinched, broken, or become otherwise damaged.

Embodiments of the retention assembly, as will be discussed, include a mounting bracket, a conduit with connection fitting, and a plug coupled to the connection fitting. The plug includes a stud that extends away from the plug. A retainer couples the stud and, by extension, the plug and conduit proximate to the mounting bracket. Each of the components is described below and in reference to the various figures.

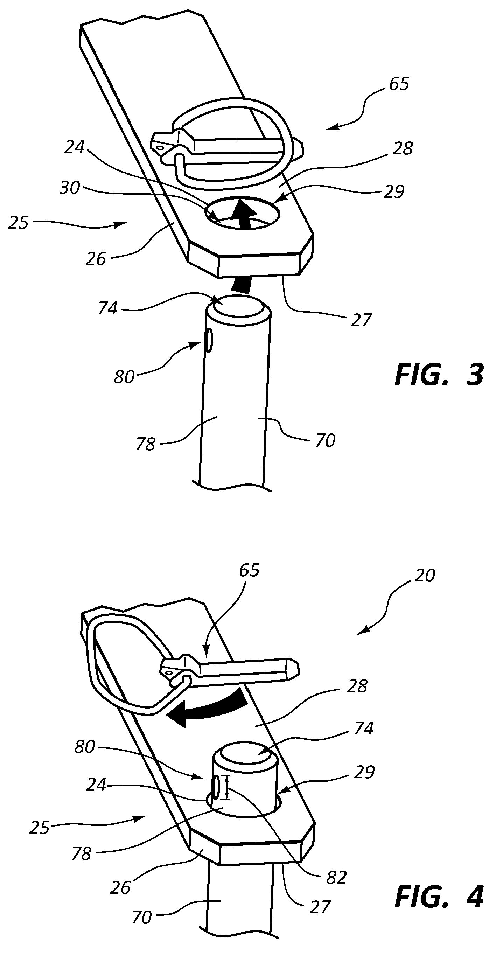

Affixed to a portion of the crane 10, or perhaps formed integrally with a structure 18 (FIG. 1), is a mounting bracket 25 (FIGS. 3 - 6). The mounting bracket 25 is a portion of the retention assembly 20 by which the conduit 15 is coupled to the mounting bracket 25. An example of the mounting bracket 25, as illustrated in FIGS. 3 - 6, is a plate 26 having a first side 27 and a second side 28 spaced apart from the first side 27.

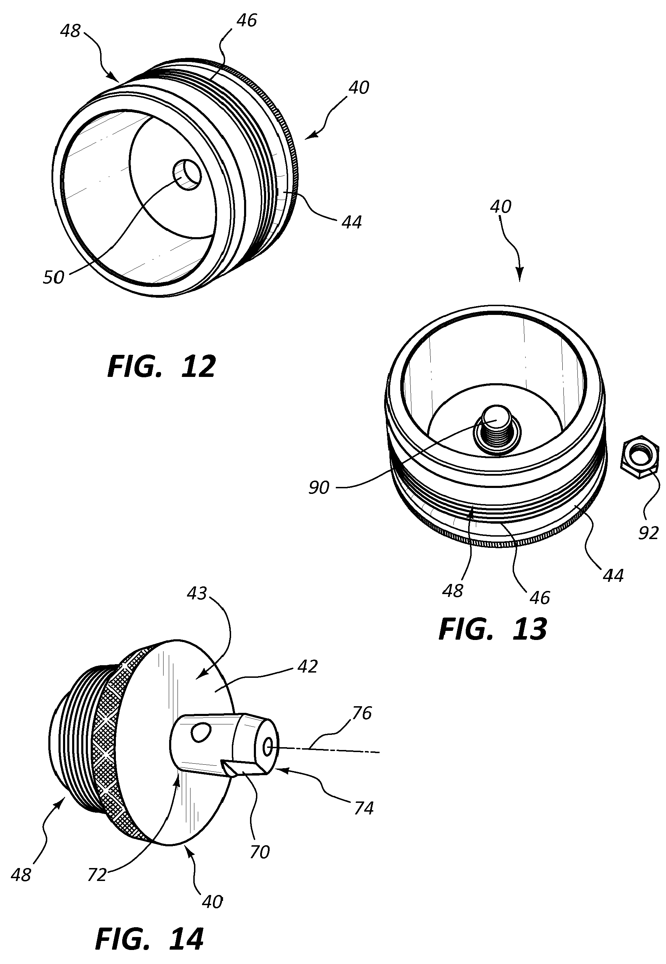

The mounting bracket 25 includes a recess 29 configured to receive a portion of a stud 70 of a plug 40 (FIGS. 12 - 14) that is coupled to a connection fitting 16 (FIG. 2) of the conduit 15. As illustrated in FIGS. 3 - 6, the recess 29 is a through-hole 30. A portion 24 of the mounting bracket 25 defines the through-hole 30 and, in some instances, comprises the retainer as will be discussed below.

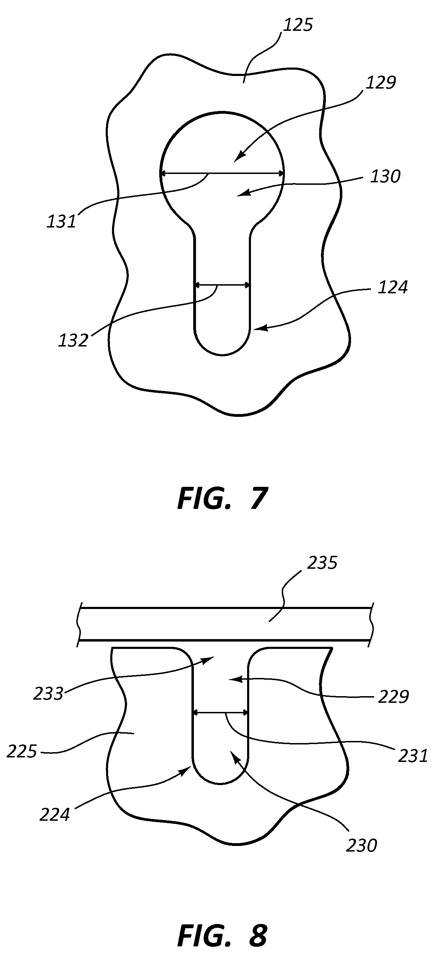

Figures 7-11 illustrate other embodiments of a mounting bracket. In FIG. 7, a mounting bracket 125 includes a recess 129 in the form of a key slot 130. A portion 124 of the mounting bracket 125 defines the key slot 130 and, in some instances, comprises the retainer as will be discussed below. The key slot 130 includes at least a first dimension 131 of a first length, and a second dimension 132 of a second length that is less than the first length.

In FIG. 8, a mounting bracket 225 includes a recess 229 in the form of a slot 230. A portion 224 of the mounting bracket 225 defines the slot 230 and, in some instances, comprises the retainer as will be discussed below. The slot 230 includes at least a first dimension 231 of a first length. The length 231 may be constant across a depth of the slot 230, or it may decrease or increase towards a root of the slot 230. The mounting bracket 225 may include a removable locking bar 235 that covers at least a portion of an opening 233 of the slot 230. The bar 235 may be of any shape, including a plate, bar, round stock, and others. The bar 235 may be pivotably coupled to the mounting bracket 225 or it may be removably coupled to the mounting bracket 225.

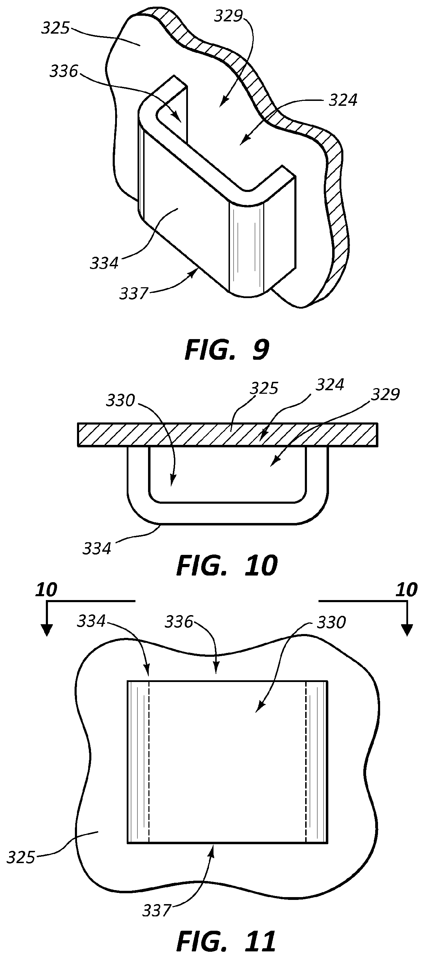

Figures 9 - 11 illustrate another embodiment of a mounting bracket 325 that includes a recess 329 in the form of a pocket 330. A portion 324 of the mounting bracket 325 defines the pocket 330 and the pocket 330 is further defined by the retainer 334, as will be discussed below. The retainer 334 may be coupled to the mounting bracket 325 or formed integrally with the mounting bracket 325. The retainer 334 typically is a u-shaped bracket and optionally is either open at at least one of a first end 336 and a second end 337 spaced apart from the first end 336. The pocket 330 is configured to receive a stud 270 as discussed below.

Turning back to FIG. 2, the conduit 15 includes a connection fitting 16 coupled to at least one end 17 of the conduit 15. The connection fitting may include a threaded connection, quick connect, or other type of connection known in the art, and may be one of either a male connection or a female connection.

Also illustrated in FIGS. 2 and 12 - 14 is an embodiment of a plug 40 that forms part of the retention assembly 20. The plug 40 is removably coupled to the connection fitting 16. The plug 40 includes a first end 42 and a second end 44 spaced apart from the first end 42. In some embodiments, the first end 42 of the plug 40 defines a plane 43.

Optionally, at least one of the connection fitting 16 and the second end 44 of the plug 40 includes a sealing mechanism 46. Figures 12 and 13 illustrate the sealing mechanism 46 coupled to the plug 40 adjacent to the second end 44, but the sealing mechanism could be positioned elsewhere. The sealing mechanism 46 may be an O-ring, sealing washer, or other type of sealing compound (e.g., greases) or mechanism.

The second end 44 of the plug includes one of a male connection and a female connection, whichever is the opposite type (male or female) of the connection on the connection fitting 16. As illustrated in FIGS. 12 - 14, the plug 40 includes a male connection 48, in this instance a threaded male connection, configured to removably couple to a threaded female connection (not illustrated) of the connection fitting 16.

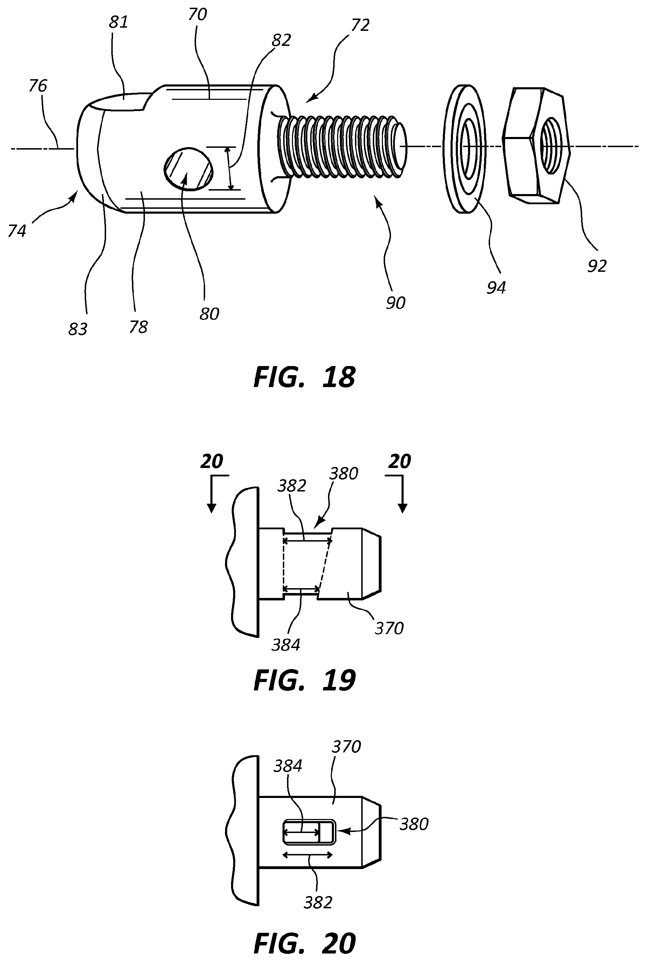

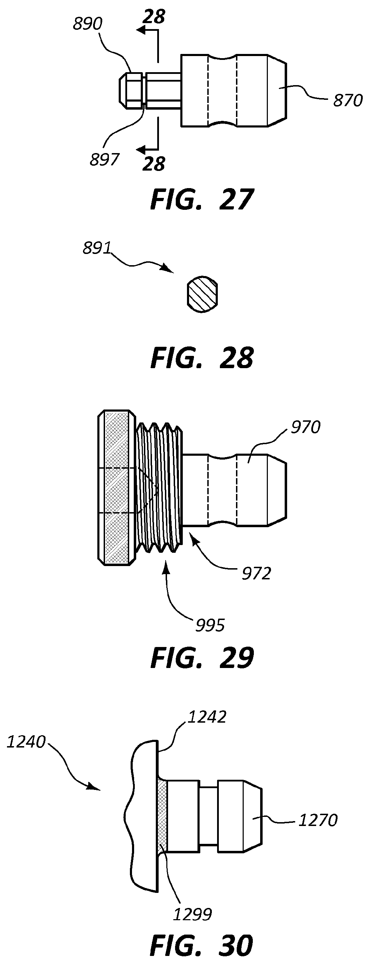

In some embodiments, the plug 40 includes a plug recess 50 that extends at least partially from the first end 42 of the plug 40 towards the second end 42 of the plug 40. The plug recess 50 is configured to receive a stud extension 90 that extends away from the first end 72 of the stud 70, as illustrated in FIGS. 13 and 18. Figure 12 illustrates a plug recess 50 that extends entirely from the first end 42 through to the second 44 of the plug 40. Regardless of whether or not the plug recess 50 extends through the plug 40, the plug recess may be smooth, as illustrated, or it may be threaded. Optionally, the plug recess 50 includes at least one flat (not illustrated) that corresponds with a flat 891 on the stud extension 890, as illustrated in FIGS. 27 and 28, so as to minimize any rotational movement of the stud extension 890 and, consequently, the stud 870.

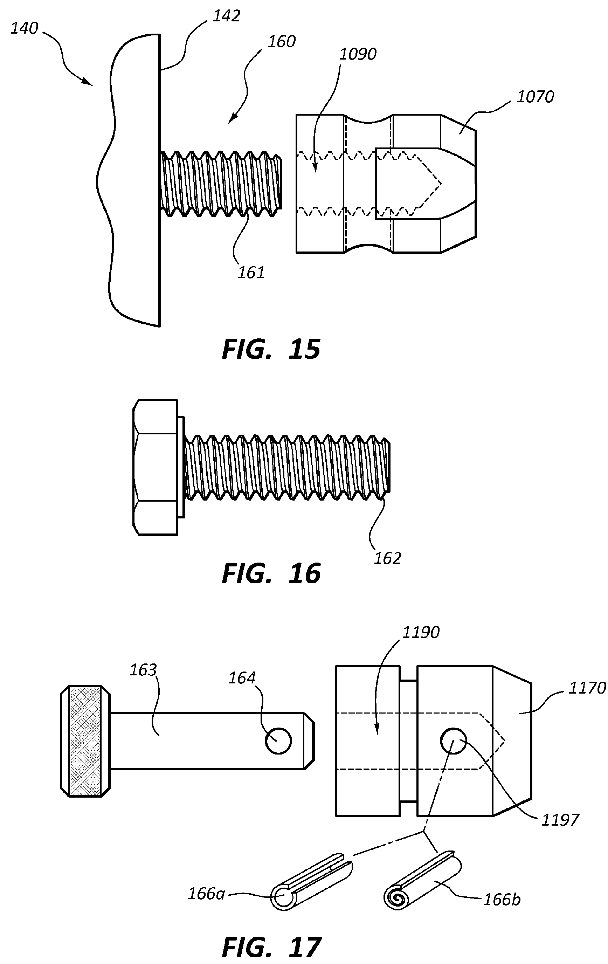

Alternatively, rather than a plug recess 50 to receive a stud extension 90 (FIGS. 13 and 18), a plug 140 may include a plug extension 160 that extends away from the first end 142 of the plug 140, as illustrated in FIG. 15, to be received in a recess 1090 of a plug 1070. The plug extension 160 may be at least a partially threaded extension 161 integrally formed with the plug 140 or it may be a threaded bolt 162 (FIG. 16) that extends through a plug recess (such as plug recess 50) from the second end of the plug 140 to the first end 142 of the plug 140. Alternatively and as illustrated in FIG. 17, the plug extension 160 may be at least a partially smooth pin 163 either integrally formed with the plug 140 or it may be a pin 163 that extends through a plug recess (such as plug recess 50) from the second end of the plug 140 to the first end 142 of the plug 140. In the embodiment of a pin 163, it may be coupled to the stud 1170 with a locking mechanisml66a, 166b, such as biasing pin like a roll pin or a spring pin, that extends at least partially through a hole 164 in the pin 163 and partially through a hole 1197 in the stud 1170.

Referring to FIGS. 2, 3 - 6, and 18, the plug 40 includes a stud 70 having a first end 72 and a second end 74 spaced apart from the first end 72. The second end 74 of the stud 70 extends away from the first end 72. A longitudinal axis 76 extends between the first end 72 of the stud 70 and the second end 74 of the stud 70. As illustrated in FIGS. 2, 14, and 18, the longitudinal axis is substantially perpendicular to the plane 43 defined by the first end 42 of the plug 40, although in other embodiments the longitudinal axis 76 may intersect the plane 43 at any angle between zero and ninety degrees. The stud 70 may be cylindrical, rectangular, square, or any other shape. As illustrated in FIGS. 2, 3 - 6,14, and 18 the stud 70 is cylindrical in shape.

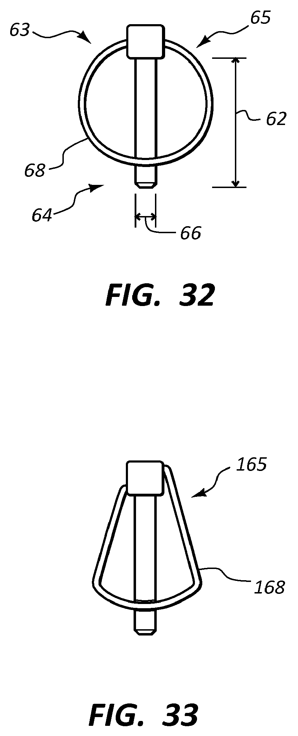

The stud 70 includes a surface 78, and in some embodiments as illustrated in FIGS. 2, 14, and 18, a recess 80 that extends into the stud 70 from the surface 78 and at least partially through the stud 70. The recess 80 is configured to receive a retainer 65, 165, 265, 365, 465b, 465c (FIGS. 32 - 35, 36b, 36c) and to couple with the stud 70 to retain the conduit 15 proximate the mounting bracket 25 and, more specifically, couple the plug 40 and the connection fitting 16 proximate to the mounting bracket 25. The recess 80 includes a recess dimension 82 (FIG. 18), typically a width, length, or diameter of the recess 80. As illustrated in FIGS. 2, 14, and 18, the recess 82 is a through hole.

As illustrated in FIG. 18, the stud 70 optionally includes flats or flatted portions 81 that can be used as a wrench flat when coupling some embodiments of the stud 70 to the plug 40. In addition, the stud 70 optionally includes a chamfer or chamfered region 83 of reduced dimension or diameter relative to the rest of the stud 70. The chamfered region 83 may make it easier to install or insert the stud 70 into the recess 29 of the mounting bracket 25.

A stud can be coupled to the plug 40 by various methods. For example, as illustrated in FIGS. 13 and 18 the stud 70 includes a stud extension 90 that extends away from the first end 72 of the stud 70. As discussed above, the stud extension 90 is received into a recess 50, whether that recess 50 is a through hole or only partially extends into the first side 42 of the plug 40. As illustrated in FIGS. 13 and 18, the stud extension 90 is at least partially threaded and can couple to a threaded hole 50 or, as illustrated, employ an extension retainer 92. As illustrated in FIGS. 13 and 18, the extension retainer 92 may be a nut (locking nut, conventional nut, wing nut, or other type of nut). Alternatively, the extension retainer 92 may be a clip, ring, or another retainer, including those that could be received in a groove or recess 897 as illustrated in FIG. 27. At least one washer 94 may be positioned around the stud extension 90 and between the first end 72 of the stud 70 and the first end 42 of the plug 40. The washer 94 may be a conventional flat washer, a lock washer, a sealing washer or a washer of any other type. At least one sealing washer may be selected in the event the recess 50 is a through hole to reduce the risk that any contaminants might pass through the recess 50 and potentially come into contact with the connection fitting 16. Regardless of the exact structures, the first end 72 of the stud 70 is held proximate and, in most instances, adjacent to the first end 42 of the plug 40.

In some embodiments of a stud 870 illustrated in FIGS. 27 and 28, the stud extension 890 includes at least flat 890 that corresponds with a complementary flat (not illustrated) in the recess 50 of the plug 40 as discussed above.

Instead of a stud extension 90, a stud 1070, 1170 includes a stud recess 1090, 1190, as illustrated in broken lines, that extends at least partially away from the first end 142 of the plug 140. The stud recess 1090, 1190 is configured to receive the plug extension 160, the bolt 162, or the pin 163, as discussed above and as illustrated in FIGS. 15-17. Although not illustrated, the stud recess 1090 would be at least partially threaded to accept the threaded portion 161 of the plug extension 160 or the bolt 162. A washer, similar to washer 94 and its various types, may be positioned about the plug extension 160, bolt 162, and pin 163.

Alternatively, a stud 1270 may be welded or otherwise integrally formed, such as by machining, forging, or casting, to a first end 1242 of a plug 1204 as illustrated in FIG. 30. For example, and as illustrated, a weld 1299 couples the stud 1270 to the plug 1240.

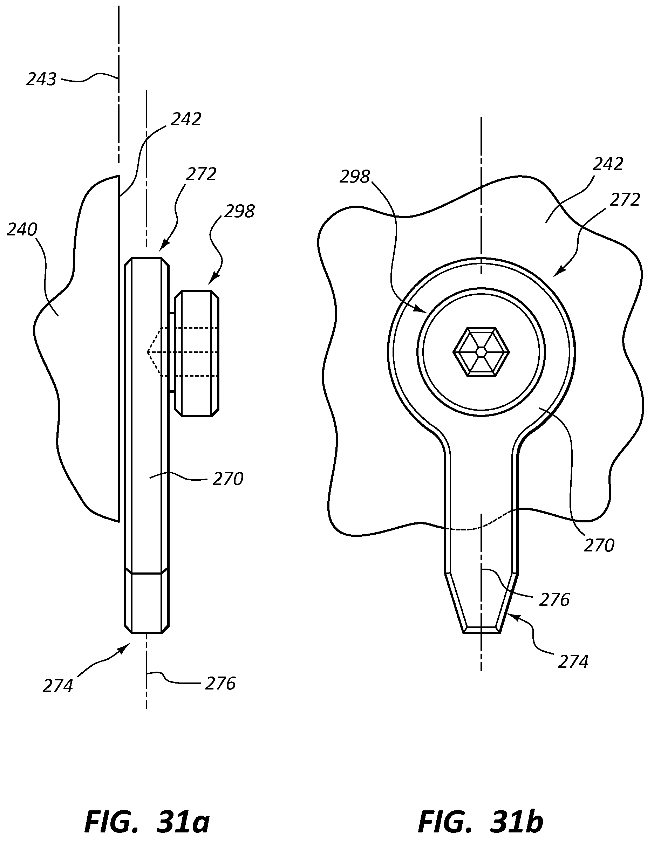

In another embodiments of the stud, illustrated in FIGS. 31a and 31b is a stud 270 with a first end 272, a second end 274 spaced apart from the first end 272, and a longitudinal axis 276 that is substantially parallel to the plane 243 defined by the first end 242 of the plug 240. This particularly embodiment of the stud 270 is configure to be received in the recess 329/pocket 330 formed by the retainer 334 coupled to the mounting bracket 325 illustrated in FIGS. 9 - 11. The stud 270 may be include a recess similar to the recess 1090, 1190 and configured to receive a plug extension similar to the plug extension 160, bolt 162, pin 163 as discussed above and illustrated in FIGS. 15 - 17. Optionally, a bolt 298 may couple to the plug extension to retain the stud 270 proximate the plug 240.

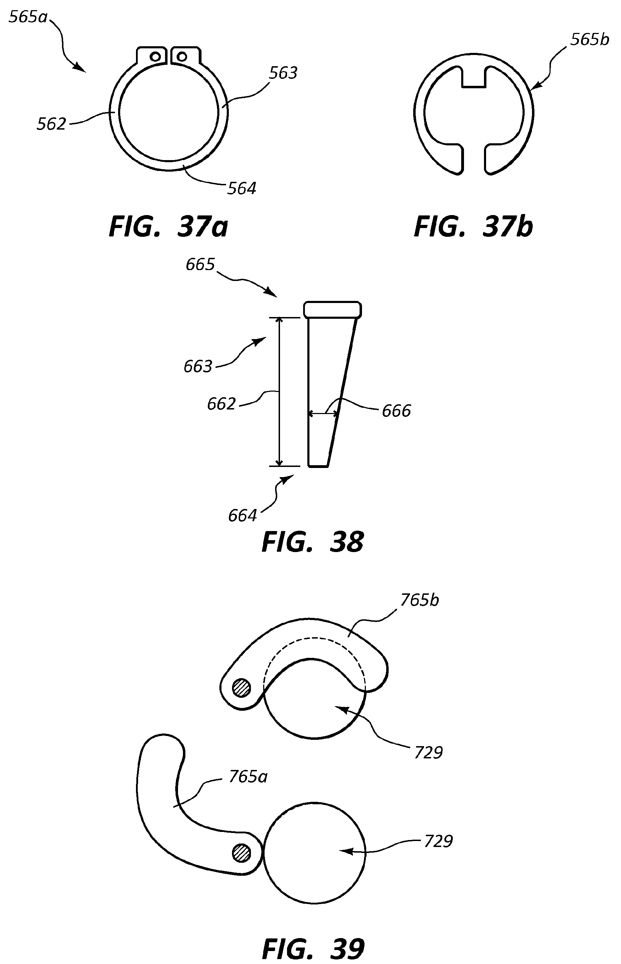

In another embodiment of a stud 370 illustrated in FIGS. 19 and 20, a recess 380 is in the shape of a wedge in which the recess 380 has first dimension 382 of a first length, and a second dimension of 384 of a second length that is less than the first dimension. The recess 380 is configured to receive, for example, the retainer 665 (FIG. 38).

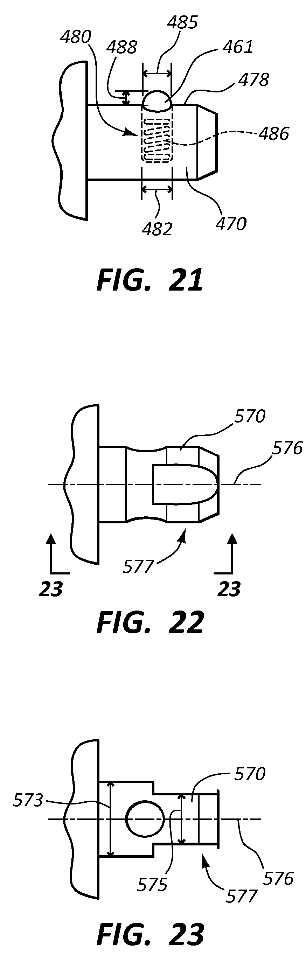

In another embodiment of a stud 470 illustrated in FIG. 21, the recess 480 extends only partially into the stud 470 from the surface 478. A retainer 461 is received and retained within the recess 480. In some embodiments, the recess 480 includes a recess dimension 482 and the retainer 461 includes a retainer dimension 485, wherein the retainer dimension is one of equal to and less than the recess dimension 482. In other words, the retainer 461 is configured to be retained within the recess 480 and within the stud 470. Typically, the opening of the recess 480 is narrower than the retainer dimension 485 to ensure the retainer 461 is retained within the recess 480, or a restriction prevents the retainer 461 from inadvertently being removed from the recess 480. The stud 470 further includes a biasing mechanism 486, such as a spring or other elastic element that is configured to urge the retainer 461 to extend a distance 488 beyond the surface 478 of the stud 470.

In another embodiment of the stud of a stud 570 illustrated in FIGS. 22 and 23, the stud 570 includes a first dimension 573 substantially perpendicular to the longitudinal axis 576 of the stud 570, although in other embodiments the first dimension 573 may be oriented differently relative to the longitudinal axis 576. A neck portion 577 includes a second dimension 575 of a second length. The second dimension 577 is substantially parallel to the first dimension 573 and is less than the first dimension 573, although in other embodiments the second dimension 575 may be oriented differently relative to the first dimension 573. The first dimension 573 and the second dimension 575 are referred to as lengths, but they may also be widths or diameters as the case may be.

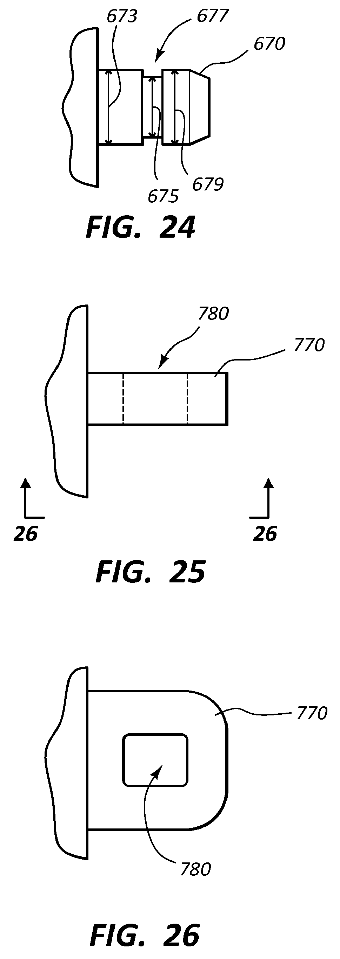

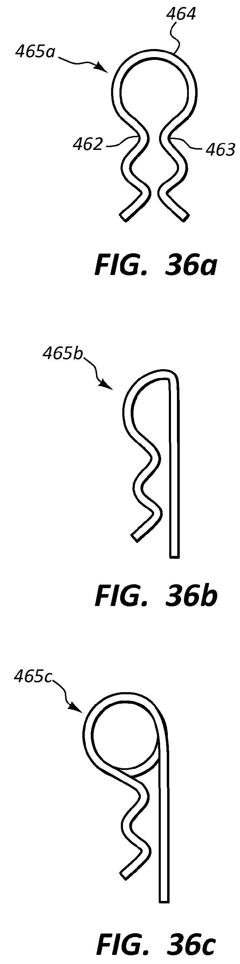

The stud 670 illustrated in FIG. 24 is similar to that in FIGS. 22 and 23 in that it has a first dimension 673, a neck portion 677, and a second dimension 675 as described above with respect to dimensions 573 and 575 and neck portion 577. The stud 670 includes a third dimension 679 of a third length. The third dimension 679 also is substantially parallel to at least one of the neck portion 677, the first dimension 675, and the second dimension 677, although in other embodiments the third dimension 679 may be oriented differently relative to the other dimensions. The third length, or the length of the third dimension 679, is greater than the second length, or the length of the second dimension 677. The third dimension 679 is referred to as a length, but it too may also be a width or a diameter as the case may be. The neck portion neck portion 677 is configured to receive a retainer 465a (FIGS. 36a); 565a and 565b (FIGS. 37a and 37b); and 765a and 765b (FIG. 39). Alternatively, the neck portion 677 may couple with the portion 24, 124, 224 of the mounting bracket 25, 125, 225 (FIGS. 3 - 6, 7, and 8), which forms a retainer, as discussed above.

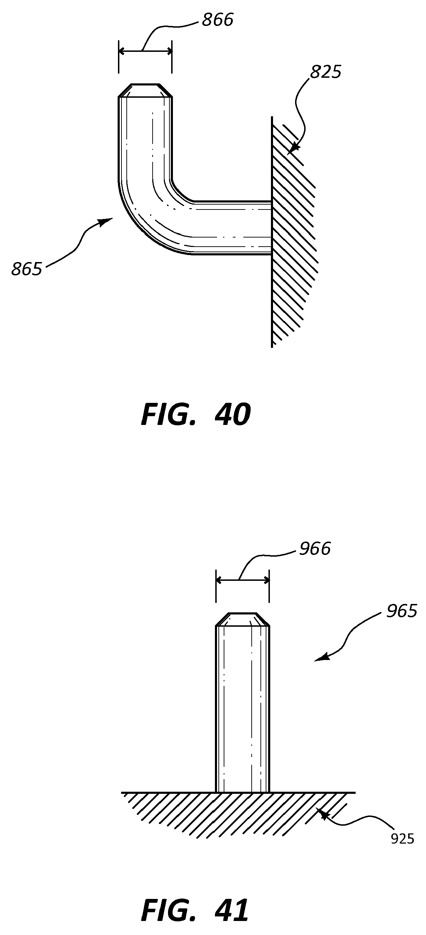

The stud 770 illustrated in FIGS. 25 and 26 is in the form of a plate and includes a recess 780 that, as illustrated, is a through hole in the shape of rectangle, although the recess 780 may be of any other shape. The recess 780 is configured to receive a retainer 865, 965 (FIGS. 40 and 41), such as the hook or a post. Of course, should the hole 80 of stud 70 be sufficiently large, the stud 70, too, could receive the retainer in the form of the hook 865, 965 (FIGS. 40 and 41).

The stud 970 in FIG. 29 includes a threaded potion 995 proximate the first end 972 of the stud 970. The threaded portion 995 is configured to couple with a recess 29 of a mounting bracket 25 that includes complementary threads (not illustrated).

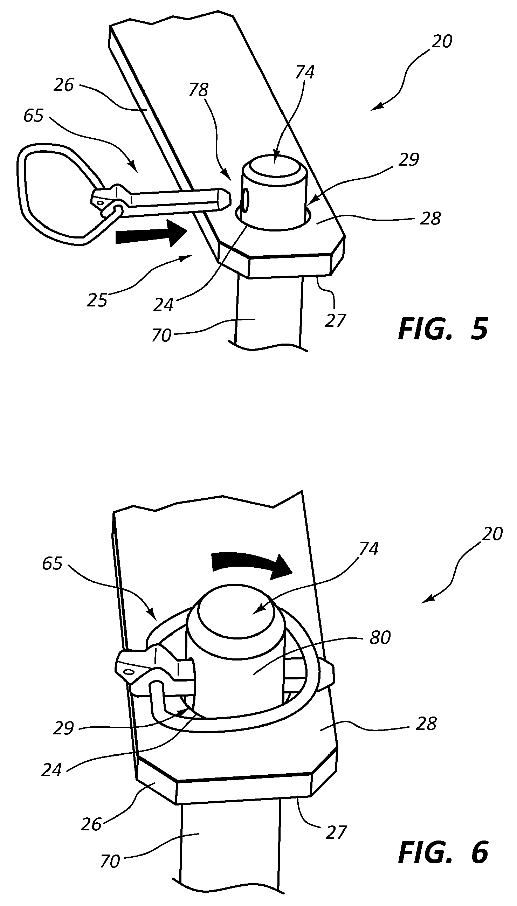

The retention assembly 20 can be realized with a variety of retainers. For example, and as illustrated in FIGS. 3 - 6, and 32, one embodiment of a retainer 65 is a spring pin, such as a lynch pin. The retainer 65 - as with all of the disclosed retainers other than retainer 334 - includes a retainer dimension 66 that is one of equal to and less than the recess dimension 82 (FIG. 18) of the stud 70, for example. This allows the retainer 65 to be received at least partially within the recess 80. Optionally, the retainer 65 has sufficient length 62 between a first end 63 and proximate a second end 64 to extend entirely through a recess 80 provided the recess 80 is a through hole. In addition, the retainer 65 includes a locking feature or locking mechanism 68, such as a loop pivotally coupled to an end of the retainer 65. The loop 68 optionally includes a biasing mechanism that urges the loop 68 towards one of the two ends of the retainer 65 or urges the loop 68 to maintain whatever position to which it is moved. Optionally, the loop 68 is configured to extend over and around the stud 70 when the loop 68 is in its "closed" position as illustrated in FIGS. 6 and 32. While the loop 68 is illustrated as generally round or oval in shape in FIGS. 3 - 6 and 32, other versions of the retainer, such as a DIN/ISO lynch pin 160 include a loop 168 in a triangular shape as illustrated in FIG. 32. Of course the loops 68, 168 may be of any shape.

As illustrated in FIGS. 3 - 6, once the stud 70 is inserted through the recess 29 of the mounting bracket 25, the retainer 65 has its loop 68 moved to the open position, and is then inserted into the recess 80. The loop 68 is then moved to the closed position to prevent the retainer 65 from backing out of the hole 68. The retainer 65 thus couples the stud 70 and, thereby the plug 40 and the conduit 15 proximate the mounting bracket 25.

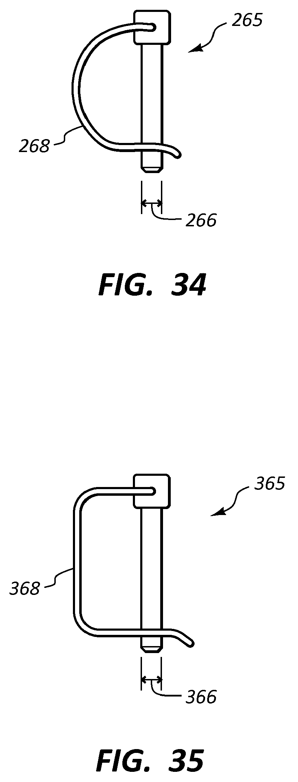

Another embodiment of the retainer is illustrated in FIGS. 34 and 35, which each illustrate a retainer 265, 365 in the form of a safety pin. Each of the retainers 265, 365 includes a retainer dimension 266, 366 that is one of equal to and less than the recess dimension 82 (FIG. 18) of the stud 70, for example. Optionally, the retainers 265, 365 each include a partial loop 268 (round, for example), 368 (square, for example) that is pivotally coupled to an end of the retainer 265,3655. The partial loop 268, 368 optionally may include a biasing mechanism that urges the loop 268, 368 towards one of the two ends of the retainer 265, 365 or urges the loop 268, 368 to maintain whatever position to which it is moved. In addition, the partial loop 268, 368 may be sufficiently elastic to extend over an end of the retainer 265, 365 when a force is applied to the partial loop, and then return elastically to its original shape to place the pin in the locked position as illustrated in FIGS. 34 and 35.

Figures 36a, 36b, and 36c, include a variety of retainers 465a, 465b, and 465c in the form of a pin. The retainer 465a is in the form of a bowtie pin, the retainer 465b is in the form of a single loop pin, and the retainer 465c is in the form of a double loop pin. Regardless of the specific type, and with reference to the retainer 465a for convenience, each of the retainers includes a first portion 462 and at least a second portion 463 spaced apart from the first portion 462. A biasing mechanism 464 couples the first portion 462 to the second portion 463. While the biasing mechanism may be a spring or other elastic mechanism, as illustrated the biasing mechanism 464 is integrally formed with the first portion 462 and the second portion 463 and relies upon elastic deformation of the material from which the retainer 465a is formed.

Figures 37a and 37b include a variety of retainers 565a and 565b in the form of a snap rings, circlip, or e-style rings. The retainer 565a is in the form of a circlip ring and the retainer 565b is in the form of an e-style ring. Regardless of the specific type, and with reference to the retainer 565a for convenience, each of the retainers includes a first portion 562 and at least a second portion 563 spaced apart from the first portion 562. A biasing mechanism 564 couples the first portion 562 to the second portion 563. While the biasing mechanism may be a spring or other elastic mechanism, as illustrated the biasing mechanism 564 is integrally formed with the first portion 562 and the second portion 563 and relies upon elastic deformation of the material from which the retainer 565a is formed.

Figure 38 illustrates another embodiment of a retainer 665, which takes the form of a wedge. The retainer 665 includes at least one retainer dimension 666 that is one of equal to and less than the recess dimension 382 (FIGS. 19 and 20) of the stud 370, for example. This allows the retainer 665 to be received at least partially within the recess 380. Optionally, the retainer 65 has sufficient length 662 between a first end 663 and proximate a second end 664 to extend entirely through a recess 380 provided the recess 80 is a through hole. Of course, the retainer 665 must be sufficiently wide at some point of its length to prevent the retainer 665 from passing entirely through the recess 380.

Figures 39a and 39b illustrate a retainer 765a in an open position and a retainer 765b in a closed position. Each of the retainers 765a, 765b is pivotally coupled to a mounting bracket 725 proximate to a recess 729. The retainers 765a and 765b are configured to interact with a neck portion 677 of a stud 670 as illustrated in FIG. 24.

Figures 40 and 41 illustrate a retainer 865 and 965 that take the form of a hook and a post, respectively, coupled directly to the mounting bracket 825, 925. The hook 865 and the post 965 each have a retainer dimension 866, 966, respectively, that is one of equal to and less than a recess dimension, such as 82, or, more typically a dimension of the recess 780 of the stud 770 as illustrated in FIGS. 25 and 26. Optionally, the retainers 865, 965 may be formed integrally with the mounting bracket 825, 925.

An example of a method of manufacturing a conduit plug also is disclosed. The method includes obtaining a plug configured to be removably coupled to the connection fitting. The plug includes a first end and a second end spaced apart from the first end. The method also includes coupling a stud having a first end and a second end spaced apart from the first end, and a longitudinal axis extending between the first end of the stud and the second end of the stud. The stud is configured to extend substantially perpendicularly away from the first end of the plug. Of course, one of skill in the art would understand how to manufacture a plug with any of the other embodiments of the studs disclosed above.

The method further comprises machining a recess at least partially through one of the first end of the plug in a direction towards the second end of the plug and the first end of the stud in a direction towards the second end of the stud. At least one of a threaded plug extension that extends away from the first end of the plug and a threaded stud extension that extends away from the first end of the stud is provided. Threads are then provided within the recess and the stud is screwed onto the plug.

In some embodiments of the method, the recess extends from the first end of the plug through to the second end of the plug. The stud extension is inserted through the recess and a portion of the stud extension is retained proximate the second end of the plug. The stud extension may be threaded and retained by screwing a nut onto the thread extension. Alternatively, the stud is welded to the plug.

In some embodiments of the method, a plug extension that extends away from the first end of the plug is inserted into the recess of the stud. The plug extension is coupled to the stud with a locking mechanism configured to interact with another recess that extends partly through the plug extension.

The present invention, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation.

The foregoing discussion of the invention has been presented for purposes of illustration and description. The foregoing is not intended to limit the invention to the form or forms disclosed herein. In the foregoing detailed description for example, various features of the invention are grouped together in one or more embodiments for the purpose of streamlining the disclosure. The various features of each of the various embodiments can be combined in whole or in part with features of the other embodiments. In other words, the features of one embodiment are not exclusive to the features of any of the other embodiments. Further, this method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this detailed description, with each claim standing on its own as a separate preferred embodiment of the invention.

Moreover, though the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

### NUMBERED EMBODIMENTS

1. A retention assembly to support and couple a conduit to a mounting bracket on a crane comprises:
   a crane that includes:
      at least one mounting bracket;
      at least one conduit including at least one end with a connection fitting;
   a plug removably coupled to the connection fitting, the plug including:
      a first end and a second end spaced apart from the first end;
      a stud having a first end and a second end spaced apart from the first end, and a longitudinal axis extending between the first end of the stud and the second end of the stud, the second end of the stud being configured to extend away from the first end of the plug; and,
   a retainer configured to couple with the stud to retain the conduit proximate the at least one mounting bracket.
2. The retention assembly of claim 1, wherein the longitudinal axis of the stud is substantially perpendicular to a plane defined by the first end of the plug.
3. The retention assembly of claim 1 or claim 2, wherein the stud further comprises:
   a first dimension of a first length, the first dimension being substantially perpendicular to the longitudinal axis of the stud; and,
   a neck portion including a second dimension of a second length, the second dimension being substantially parallel to the first dimension and the second length being less than the first length.
4. The retention assembly of claim 3, wherein the stud further comprises a third dimension of a third length, the third dimension being substantially parallel to the neck portion and the third length being greater than the second length.
5. The retention assembly of claim 3 or claim 4, wherein the neck portion is configured to receive the retainer.
6. The retention assembly of claim 1, wherein the retainer comprises a first portion and at least a second portion spaced apart from the first portion, and a biasing mechanism that couples the first portion to the second portion.
7. The retention assembly of claim 5, wherein the biasing mechanism of the retainer is integrally formed with the first portion and the second portion.
8. The retention assembly of claim 1, wherein the stud further comprises a surface and a recess that extends into the stud from the surface and at least partially through the stud, the recess being configured to receive the retainer
9. The retention assembly of claim 8, wherein the retainer is configured to be retained within the stud and wherein the stud further comprises a biasing mechanism configured to urge the retainer to extend a distance beyond the surface of the stud.
10. The retention assembly of claim 8, wherein the recess in the surface of the stud includes a recess dimension and the retainer includes a retainer dimension, wherein the retainer dimension is one of equal to and less than the recess dimension.
11. The retention assembly of claim 8 or claim 10, wherein the recess in the surface of the stud extends through the stud to form a through hole, the recess having a depth, and wherein the retainer includes a first end and a second end and a length between the first end and the second end that is greater than the depth of the recess.
12. The retention assembly of any of claims 8, 10, or 11, wherein the stud comprises at least one of a cylinder and a plate.
13. The retention assembly of claim 8, wherein the recess includes a first width and a second width narrower than the first width.
14. The retention assembly of claim 1, wherein the retainer includes a locking feature configured to maintain the retainer in its coupled state with the stud.
15. The retention assembly of any of claims 1 through 14, wherein the stud includes at least a pair of wrench flats.
16. The retention assembly of any of claims 1 through 15, wherein at least one of the connection fitting and the second end of the plug includes a sealing mechanism.
17. The retention assembly of any of claims 1 through 16, wherein one of the connection fitting and the second end of the plug includes a male connection and the other of connection fitting and the second end of the plug includes a female connection.
18. The retention assembly of claim 1, wherein the plug includes a plug recess that extends at least partially from the first end of the plug towards the second end of the plug, the plug recess being configured to receive a stud extension that extends away from the first end of the stud.
19. The retention assembly of claim 18, wherein the stud extension includes at least one of a threaded portion and a flat.
20. The retention assembly of claims 18 or 19, wherein the plug recess extends from the first end through the second end to create a through hole, and wherein an extension retainer is configured to retain a portion of the stud extension adjacent the second end of the plug.
21. The retention assembly of any of claims 1 through 20, wherein the plug includes a plug extension that extends away from the first end of the plug, and the stud includes a stud recess that extends at least partly away from the first end of the plug, the stud recess being configured to receive the plug extension.
22. The retention assembly of claim 21, wherein the plug extension includes at least one of a threaded portion and a through hole configured to receive a locking mechanism configure to couple the stud to the plug extension.
23. The retention assembly of any of claims 1 through 22, wherein the stud is one of welded to the first end of the plug and formed integrally with the first end of the plug.
24. The retention assembly of any of claims 1 through 23, wherein the stud includes at least a chamfered portion proximate the second end of the stud.
25. The retention assembly of claim 1, wherein the longitudinal axis of the stud is substantially parallel to a plane defined by the first end of the plug, and wherein the retainer is a pocket on the mounting bracket, the pocket being configured to receive the stud.
26. The retention assembly of any of claims 8, 10, or 11, wherein the retainer is a post that extends from the mounting bracket.
27. The retention assembly of any of claims 1 through 26, wherein the mounting bracket includes at least one of a through hole; a key slot; a slot; and a slot and bar combination.
28. The retention assembly of claim 3, wherein the mounting bracket includes at least one of a through hole, a key slot, and a slot and wherein at least a portion of the mounting bracket that defines the at least one of the through hole, the key slot, and the slot comprises the retainer, wherein the neck portion is configured to receive the retainer.
29. The retention assembly of claim 3, wherein the retainer is pivotally coupled to the mounting bracket, and wherein the neck portion is configured to receive the retainer.
30. A conduit plug configured to support and couple a conduit including at least one end with a connection fitting to a mounting bracket on a construction vehicle, the mounting bracket having at least one recess, the conduit plug comprising:
   a plug removably coupled to the connection fitting, the plug including:
      a first end and a second end spaced apart from the first end;
      a stud having a first end and a second end spaced apart from the first end, and a longitudinal axis extending between the first end of the stud and the second end of the stud, the second end of the stud being configured to extend substantially perpendicularly away from the first end of the plug, the stud being configured to extending through the recess in the mounting bracket when the plug is coupled to the mounting bracket; and,
      wherein the stud further comprises a surface and a recess that extends into the stud from the surface and at least partially through the stud, the recess being configured to receive a retainer; and
   wherein the retainer is configured to couple removably with the stud to retain the plug proximate the mounting bracket when the plug is coupled to the mounting bracket.
31. The conduit plug of claim 30, wherein the retainer is configured to be retained within the recess and wherein the stud further comprises a biasing mechanism configured to urge the retainer to extend a distance beyond the surface of the stud.
32. The conduit plug of claim 30 or claim 31, wherein the recess includes a recess dimension and the retainer includes a retainer dimension, wherein the retainer dimension is one of equal to and less than the recess dimension.
33. The conduit plug of any of claims 30 through 32, wherein the recess extends through the stud to form a through hole, the recess having a depth, and wherein the retainer includes a first end and a second end and a length between the first end and the second end that is greater than the depth of the recess.
34. The conduit plug of any of claims 30 through 33, wherein the stud comprises at least one of a cylinder and a plate.
35. The conduit plug of any of claims 30 and 32 through 34, wherein the recess includes a first width and a second width narrower than the first width.
36. The conduit plug of claim 30, wherein the retainer includes a locking feature configured to maintain the retainer in its coupled state with the stud.
37. The conduit plug of any of claims 30 through 36, wherein the second end of the plug includes one of a male connection and a female connection configured to removably couple with the connection fitting.
38. The conduit plug of claim 30, wherein the plug includes a plug recess that extends at least partially from the first end of the plug towards the second end of the plug, the plug recess being configured to receive a stud extension that extends away from the first end of the stud.
39. The conduit plug of claim 38, wherein the stud extension includes at least one of a threaded portion and a flat.
40. The conduit plug of claim 38 or claim 39, wherein the plug recess extends from the first end through the second end to create a through hole, and wherein an extension retainer is configured to retain a portion of the stud extension adjacent the second end of the plug.
41. The conduit plug of any of claims 38 through 40, wherein the stud includes at least a chamfered portion proximate the second end of the stud.
42. A method of manufacturing a conduit plug configured to support and couple a conduit including at least one end with a connection fitting to a mounting bracket on a construction vehicle, the mounting bracket having at least one recess, the conduit plug comprising:
   obtaining a plug configured to be removably coupled to the connection fitting, the plug including a first end and a second end spaced apart from the first end; and,
   coupling a stud having a first end and a second end spaced apart from the first end, and a longitudinal axis extending between the first end of the stud and the second end of the stud, the second end of the stud being configured to extend substantially perpendicularly away from the first end of the plug.
43. The method of claim 42, further comprising machining a recess at least partially through one of the first end of the plug in a direction towards the second end of the plug and the first end of the stud in a direction towards the second end of the stud.
44. The method of claim 42 or claim 43, further comprising providing at least one of a threaded plug extension that extends away from the first end of the plug and a threaded stud extension that extends away from the first end of the stud, providing threads within the recess, and screwing the stud onto the plug.
45. The method of any of claims 42 through 44, wherein the recess extends from the first end of the plug through to the second end of the plug, and wherein the method further comprises inserting a stud extension that extends away from the first end of the stud through the recess and retaining a portion of the stud extension proximate the second end of the plug.
46. The method of any of claims 42 through 45, further comprising provided threads on the stud extension and screwing a nut onto the stud extension.
47. The method of claim 42, further comprising welding the stud to the plug.
48. The method of any of claims 42 through 46, further comprising providing a plug extension that extends away from the first end of the plug, inserting the plug extension into the recess of the stud, and coupling the plug extension to the stud with a locking mechanism configured to interact with another recess that extends partly through the plug extension.
49. The method of any of claims 42 through 48, wherein the stud further comprises a first dimension of a first length, the first dimension being substantially perpendicular to the longitudinal axis of the stud, and wherein the method further comprises providing the stud with a neck portion that includes a second dimension of a second length, the second dimension being substantially parallel to the first dimension and the second length being less than the first length.
50. The method of claim any of claims 42 through 49, wherein the stud further comprises a surface, and wherein the method further comprises providing a recess that extends into the stud from the surface and at least partially through the stud.

## Claims

1. A conduit plug configured to support and couple a conduit including at least one end with a connection fitting to a mounting bracket on a construction vehicle, the mounting bracket having at least one recess, the conduit plug comprising:
a plug removably coupled to the connection fitting, the plug including:
a first end and a second end spaced apart from the first end;
a stud having a first end and a second end spaced apart from the first end, and a longitudinal axis extending between the first end of the stud and the second end of the stud, the second end of the stud being configured to extend substantially perpendicularly away from the first end of the plug, the stud being configured to extending through the recess in the mounting bracket when the plug is coupled to the mounting bracket; and,
wherein the stud further comprises a surface and a recess that extends into the stud from the surface and at least partially through the stud, the recess being configured to receive a retainer; and
wherein the retainer is configured to couple removably with the stud to retain the plug proximate the mounting bracket when the plug is coupled to the mounting bracket.

2. The conduit plug of claim 1, wherein the retainer is configured to be retained within the recess and wherein the stud further comprises a biasing mechanism configured to urge the retainer to extend a distance beyond the surface of the stud.

3. The conduit plug of claim 1 or claim 2, wherein the recess includes a recess dimension and the retainer includes a retainer dimension, wherein the retainer dimension is one of equal to and less than the recess dimension.

4. The conduit plug of any of claims 1 through 3, wherein the recess extends through the stud to form a through hole, the recess having a depth, and wherein the retainer includes a first end and a second end and a length between the first end and the second end that is greater than the depth of the recess.

5. The conduit plug of any of claims 1 through 4, wherein the stud comprises at least one of a cylinder and a plate.

6. The conduit plug of any of claims 1 and 3 through 5, wherein the recess includes a first width and a second width narrower than the first width.

7. The conduit plug of claim 1, wherein the retainer includes a locking feature configured to maintain the retainer in its coupled state with the stud.

8. The conduit plug of any of claims 1 through 7, wherein the second end of the plug includes one of a male connection and a female connection configured to removably couple with the connection fitting.

9. The conduit plug of claim 1, wherein the plug includes a plug recess that extends at least partially from the first end of the plug towards the second end of the plug, the plug recess being configured to receive a stud extension that extends away from the first end of the stud.

10. The conduit plug of claim 9, wherein the stud extension includes at least one of a threaded portion and a flat.

11. The conduit plug of claim 9 or claim 10, wherein the plug recess extends from the first end through the second end to create a through hole, and wherein an extension retainer is configured to retain a portion of the stud extension adjacent the second end of the plug.

12. The conduit plug of any of claims 1 through 11, wherein the stud includes at least a chamfered portion proximate the second end of the stud.

13. A method of manufacturing a conduit plug configured to support and couple a conduit including at least one end with a connection fitting to a mounting bracket on a construction vehicle, the mounting bracket having at least one recess, the conduit plug comprising:
obtaining a plug configured to be removably coupled to the connection fitting, the plug including a first end and a second end spaced apart from the first end; and,
coupling a stud having a first end and a second end spaced apart from the first end, and a longitudinal axis extending between the first end of the stud and the second end of the stud, the second end of the stud being configured to extend substantially perpendicularly away from the first end of the plug.

14. The method of claim 13, further comprising machining a recess at least partially through one of the first end of the plug in a direction towards the second end of the plug and the first end of the stud in a direction towards the second end of the stud.

15. The method of claim 13 or claim 14, further comprising providing at least one of a threaded plug extension that extends away from the first end of the plug and a threaded stud extension that extends away from the first end of the stud, providing threads within the recess, and screwing the stud onto the plug.

16. The method of any of claims 13 through 15, wherein the recess extends from the first end of the plug through to the second end of the plug, and wherein the method further comprises inserting a stud extension that extends away from the first end of the stud through the recess and retaining a portion of the stud extension proximate the second end of the plug.

17. The method of any of claims 13 through 16, further comprising provided threads on the stud extension and screwing a nut onto the stud extension.
